# NEUE EUROPÄISCHE PATENTSCHRIFT

(11) **EP 0 472 692 B2**
(45) Veröffentlichungstag und Bekanntmachung des Hinweises auf die Entscheidung über den Einspruch: **23.08.2000**
(45) Hinweis auf die Patenterteilung: 05.07.1995
(21) Anmeldenummer: 91905774.5
(22) Anmeldetag: 18.03.1991
(51) Int. Cl.: H05K 7/02

(54) **KONTAKTIEREINRICHTUNG, INSBESONDERE FÜR EIN SIM**
CONTACTOR DEVICE, ESPECIALLY FOR AN SIM
DISPOSITIF DE CONTACT, EN PARTICULIER POUR UN SIM

(30) Priorität: 17.03.1990 DE 4008655
(43) Veröffentlichungstag der Anmeldung: 04.03.1992
(73) Patentinhaber: AMPHENOL-TUCHEL ELECTRONICS GmbH, D-74064 Heilbronn (DE)
(72) Erfinder: REICHARDT, Manfred, D-7102 Weinsberg (DE); TOLKSDORF, Martina, D-7100 Heilbronn (DE)
(74) Vertreter: Wagner, Karl H., Dipl.-Ing.
(86) Internationale Anmeldenummer: EP9100510
(87) Internationale Veröffentlichungsnummer: WO9115101

(56) Entgegenhaltungen:
- EP-A- 0 105 083
- EP-A- 0 235 925
- GB-A- 2 000 381
- US-A- 4 443 049
- US-A- 4 723 195

## Beschreibung

Die Erfindung bezieht sich auf eine Kontaktiereinrichtung für sogenannte Chipkarten oder IC-Karten. Vorzugsweise bezieht sich die Erfindung gemäß einem Ausführungsbeispiel auf eine Kontaktiereinrichtung für einen SIM. Ein SIM ist ein die Identität eines Teilnehmers (beispielsweise eines Telefonteilnehmer) identifizierendes Modul. Die Abkürzung SIM ist aus dem Englischen "Subscriber Identity Module" abgeleitet. Das Kontaktbild eines solchen Moduls entspricht dem einer IC-Karte nach ISO 7816, während die Außenmaße des SIM erheblich kleiner sind und zwar 25 X 15 mm gegenüber 85,5 X 54 mm bei der IC-Karte.

Die Erfindung bezweckt eine Kontaktiereinrichtung insbesondere für einen SIM zu entwickeln, wobei die Außenmaße der Kontaktiereinrichtung nicht wesentlich größer sein sollen als die Abmessungen des SIM selbst. Ferner soll die Bedienung, d. h. insbesondere das Einlegen bzw. Entnehmen des SIM benutzer freundlich und ohne Werkzeug möglich sein. Weiterhin ist es besonders bevorzugt keine losen Teile wie z. B. einen losen Deckel zu verwenden.

Die Erfindung sieht eine Kontaktiereinrichtung nach Anspruch 1 bzw. nach Anspruch 2 vor. Bevorzugte Ausführungsbeispiele der Erfindung ergeben sich aus den Unteransprüchen

Gemäß der Erfindung wird eine Kontaktiereinrichtung insbesondere für ein SIM vorgesehen, bei der das SIM in einer Ausnehmung oder Vertiefung eines als Kontaktträger dienenden Gehäuses anordenbar ist oder aber in einer Ausnehmung eines am Gehäuse angebrachten Deckels.

Gemäß einer bevorzugten Ausgestaltung der Erfindung besitzt die Kontaktiereinrichtung ein als Kontaktträger dienendes Gehäuse, in welches das SIM zur Kontaktierung einsetzbar ist und durch einen vorzugsweise einseitig vorgezogenen eine Vertiefung zur Aufnahme des SIM aufweisenden Anschlag (Haltearm), der beim Betätigen der Karte wegfedern kann, im Gehäuse gehalten ist. Dabei ist vorteilhaft, daß die Karte bzw. das SIM leicht zugänglich ist, wobei die Kartenarretierung und -polarisierung durch den einseitig vorgezogenen Anschlag sichergestellt ist. Dieser Lösungsvorschlag ist insbesondere an der Geräteperipherie von Vorteil.

Gemäß einer weiteren bevorzugten Ausgestaltung der Erfindung ist ein als Kontaktträger ausgebildetes Gehäuse vorgesehen. Im Kontaktträger ist eine Vertiefung oder Ausnehmung ausgebildet und zwar mit einer Polarisierungsschräge, so daß das SIM immer seitenrichtig eingelegt werden muß. Dabei ist vorzugsweise am Kontaktträger ein Deckel drehbar gelagert. Der Deckel kann in seinem geschlossenem Zustand längs verschoben und damit verriegelt werden. Der Deckel ist in seinen beiden Positionen, d. h. sowohl der Verriegelungsposition wie auch der Entriegelungsposition in den Kontaktträger eingerastet. Im entriegelten Zustand kann der Deckel zusammen mit der Karte oder dem SIM durch Anheben geöffnet werden.

Vorzugsweise ist die Lagerung des Deckels am Kontaktträger so gestaltet, daß der Deckel sehr leichtgängig ist oder aber durch Reibkraft in jede Öffnungslage stehen bleibt. Gemäß einer weiteren Ausgestaltung ist ein Federelement vorgesehen, welches den Deckel zum Entriegelungszustand hin vorspannt.

Die Erfindung sieht ferner eine Kontakteinrichtung vor, bei der das SIM bzw. die Karte nicht den Kontaktträger gelegt, sondern in einen Schacht des Deckels gesteckt wird, welcher dabei die Seitenführung des SIM übernimmt. Eine Anschlagschulter am Kontaktträger begrenzt dabei die Einstecktiefe der Karte. Beim Schließen des Deckels wird die Karte (oder das SIM) an der Anschlagschulter entlang kreisförmig in die Vertiefung des Kontaktträgers gedreht. Hierin verbleibt die Karte, wenn der Deckel zum Verriegeln längs verschoben wird, so daß keine Relativbewegung zwischen Karte und Kontaktelementen entsteht. Auch hier ist eine Variante mit einem Federelement (Deckelfeder) möglich.

Bevorzugte Ausgestaltungen der Erfindung ergeben sich auch aus den Unteransprüchen. Vorzugsweise sind die Gehäause bzw. Deckel aus Kunststoff hergestellt.

Weitere Vorteile, Ziele und Einzelheiten der Erfindung ergeben sich aus der Beschreibung von Ausführungsbeispielen anhand der Zeichnung; in der Zeichnung gezeigt:
- Fig. 1: ein erstes Ausführungsbeispiel einer Kontaktiereinrichtung in Draufsicht;
- Fig. 2: eine Seitenansicht der Kontaktiereinrichtung gemäß Fig. 1 aus Richtung des Pfeiles X;
- Fig. 3: eine Seitenansicht der Kontaktiereinrichtung gemäß Fig. 1 aus Richtung des Pfeiles Y;
- Fig. 4: eine Draufsicht auf eine Kontaktiereinrichtung gemäß einem zweiten Ausführungsbeispiel welches allerdings nur hinsichtlich der Verriegelungsmittel als Ausführungsbeispiel anzusehen ist, da es wesentliche Merkmale der Ansprüche 1 und 2 nicht zeigt;
- Fig. 5: den Schnitt JK in Fig. 4 bei geschlossenem Deckel (Lesestellung);
- Fig. 6: einen Schnitt JK in Fig. 4 bei geöffnetem Deckel (Ein-Ausgabe);
- Fig. 6a: einen Schnitt längs Linie E-F in Fig. 4;
- Fig. 6b: eine Ansicht aus Richtung des Pfeiles X in Fig. 4, wobei der Deckel sich in seiner Verriegelungsstellung befindet;
- Fig. 7: einen Schnitt CD in Fig. 4;
- Fig. 8: einen Schnitt A-B in Fig. 4;
- Fig. 9: eine Ansicht ähnlich Fig. 5, wobei bei diesem dritten Ausführungsbeispiel zusätzlich die Verwendung einer Feder dargestellt ist;
- Fig. 10: die zu Fig. 9 gehörende Draufsicht einer Kontaktiereinrichtung in einer Darstellung ähnlich Fig. 4;
- Fig. 11: eine Draufsicht auf eine Kontaktiereinrichtung gemäß einem vierten Ausführungsbeispiel;
- Fig. 12: eine Ansicht der Kontaktiereinrichtung aus Richtung des Pfeiles X in Fig. 11;
- Fig. 13: einen Schnitt längs der Linie BB in Fig. 11;
- Fig. 14: einen Schnitt längs der Linie CC in Fig. 11;
- Fig. 15: einen Schnitt längs der Linie AA in Fig. 11;
- Fig. 16: einen Schnitt längs der Linie BB in Fig. 11;
- Fig. 17: einen Schnitt FF in Fig. 11;
- Fig. 18: einen Schnitt längs der Linie EE in Fig. 11;
- Fig. 19: einen Schnitt längs der Linie DD in Fig. 11;
- Fig. 20: eine Ansicht aus Richtung des Pfeiles Y in Fig. 11.
- Fig. 21: zeigt im Detail einen Ausschnitt des rechten unteren Teils der Fig. 4, und zwar bei geschlossenem aber noch nicht in seine Lesestellung verschobenen Deckel;
- Fig. 22: eine Ansicht ähnlich Fig. 21, wobei hier der Deckel in seiner Öffnungsstellung dargestellt ist;
- Fig. 23: eine Einzelheit des Zapfens gemäß Fig. 22;
- Fig. 24: eine Einzelheit des Zapfens gemäß Fig. 21;
- Fig. 25: eine Draufsicht auf eine Kontaktiereinrichtung gemäß einem fünften Ausführungsbeispiel;
- Fig. 26: einen Schnitt längs Linie G-H in Fig. 25, wobei der Deckel hier sich auf dem Wege von seiner Öffnungs- in seine Schließstellung befindet;
- Fig. 27: ebenfalls einen Schnitt längs Linie G-H, wobei der Deckel sich hier in seiner aktiven oder Schließposition befindet;
- Fig. 28: einen Schnitt längs Linie J-K in Fig. 25, also im Bereich der Schaltkontakte, wobei sich der Deckel wie in Fig. 27 zwar in seiner aktiven aber auch noch nicht in seiner Leseposition befindet;
- Fig. 29: zeigt den Schnitt längs Linie L-M in Fig. 25, wobei der Deckel nicht verriegelt ist;
- Fig. 30: den Schnitt E-F in Fig. 25; und
- Fig. 31: den Deckel in seiner Verriegelungsstellung.

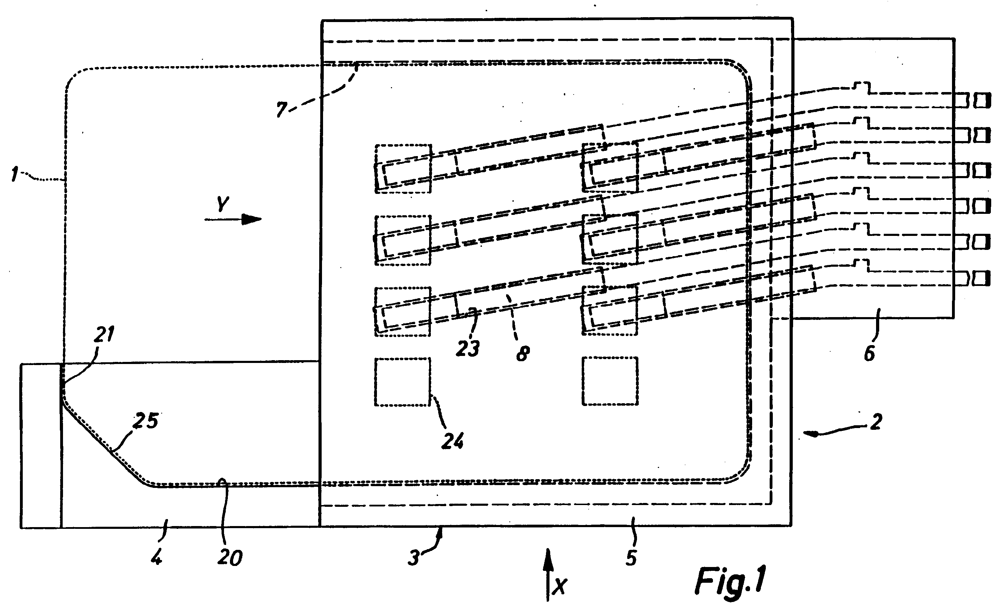

Die Fig. 1 bis 3 zeigen ein erstes Ausführungsbeispiel einer Kontaktiereinrichtung 2 für eine Chipkarte oder insbesondere für einen SIM 1. Die Kontaktiereinrichtung 2 weist ein als Kontaktträger dienendes Gehäuse 3 auf. Das vorzugsweise als ein Stück aus Kunststoff hergestellte Gehäuse 3 umfaßt ein sogenanntes Hauptgehäuseteil 5, von dem aus sich in die eine Richtung ein (einseitig) vorgezogener Anschlag oder Haltearm 4 erstreckt, während sich in die andere Richtung eine Verlängerung 6 erstreckt, aus der dann Kontaktelemente in der Form von Kontaktfedern 8 herausragen.

Der Hauptgehäuseteil 5 besitzt einen Aufnahmeschlitz 7, in den die Kontaktfedern 8 mit ihren SIM-Kontaktenden 9 hineinragen. Die Kontaktelemente 8 besitzen noch Befestigungsabschnitte 10, an denen Kontaktenden 11, beispielsweise SMD-Kontaktenden 11, ausgebildet sind, um mit nicht gezeigten Kontaktzonen in Eingriff zu kommen, die beispielsweise auf einer bei 12 angedeuteten Leiterplatte vorgesehen sind.

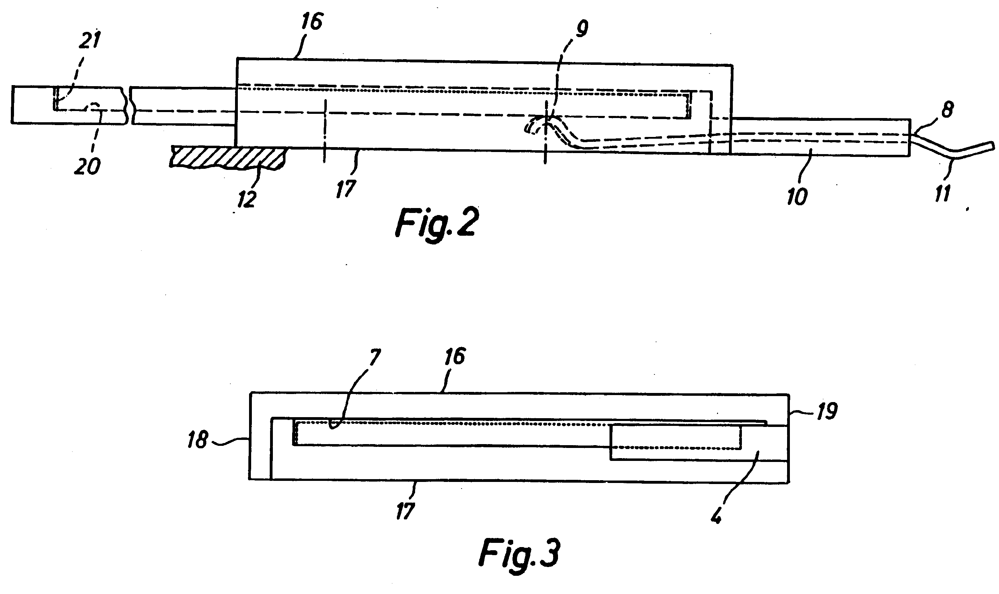

Wenn der SIM 1 in den Schlitz 7 eingesetzt ist, so liegen die SIM-Kontaktenden 9 an den entsprechenden Kontaktzonen 24 des SIM an. Der Haltearm 4 bildet eine Ausnehmung oder Vertiefung 20, die ihrerseits eine der Polarisationsschräge des SIM 1 entsprechende Polarisationsschräge 25 besitzt, so daß das richtige Einsetzen des SIM gewährleistet ist. Zum Zwecke des Einsetzens des SIM 1 kann der Haltarm 4 elastisch in Fig. 2 nach unten gebogen werden und kommt dann nach Einsetzen und Wiederloslassen des Haltearms 4 mit seiner Anlagefläche 21 an der entsprechenden Kante des SIM 1 zur Anlage, so daß der SIM sicher in der Kontaktiereinrichtung 2 gehalten wird. Zum Herausnehmen des SIM 1 wird umgekehrt vorgegangen, d.h. der Haltearm 4 wird in Fig. 2 nach unten gedrückt, so daß die Karte (SIM 1) entnommen werden kann, was leicht in dem großen Bereich (in Fig. 1) oberhalb des Haltearms 4 möglich ist. Man erkennt, daß der Haltearm 4 mit seiner in Fig. 1 nach oben ragenden Querwand vorzugsweise nur den kleineren Teil der linken Stirnseite des SIM 1 umfaßt.

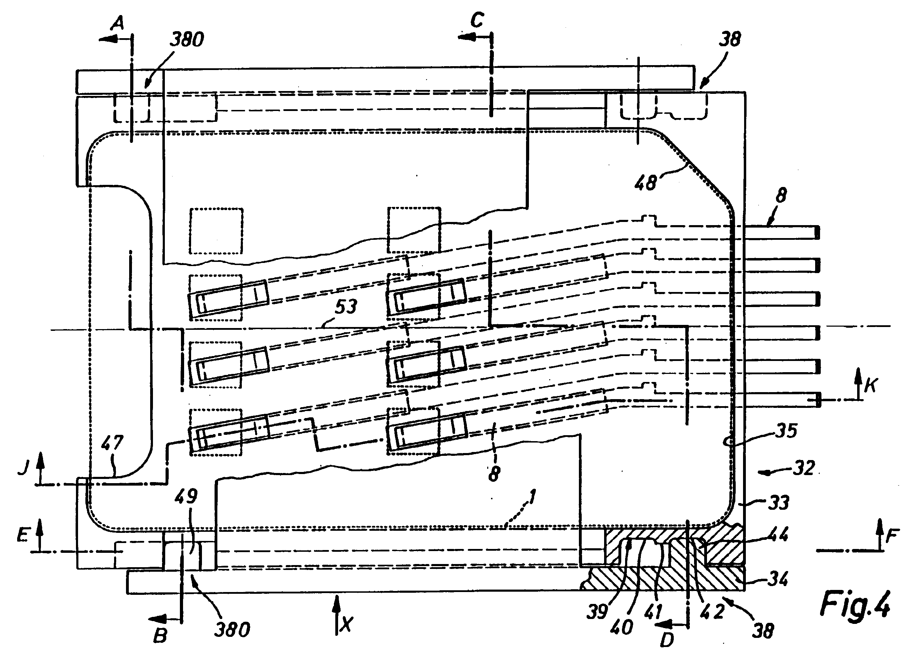

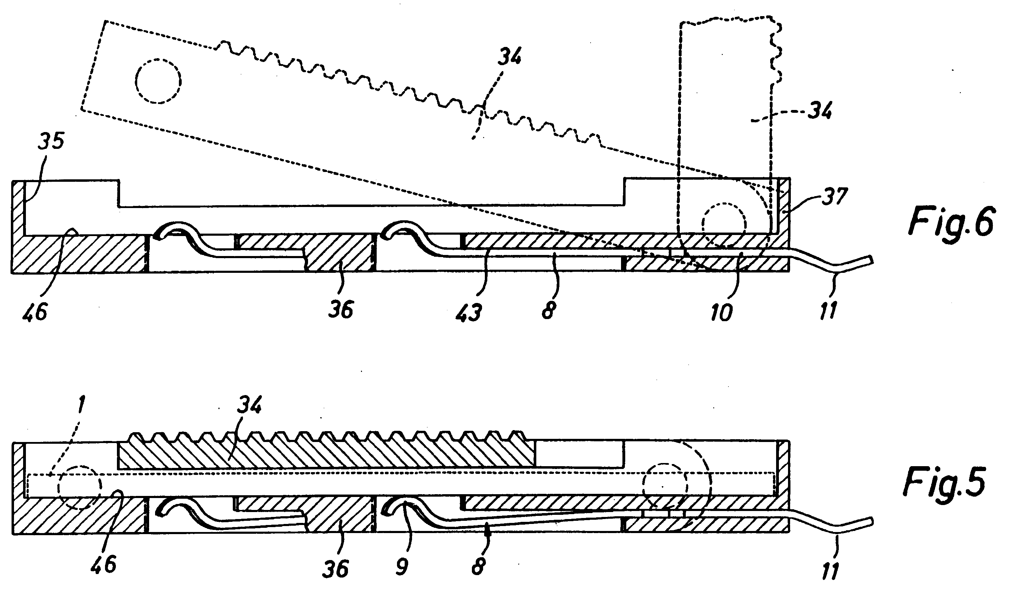

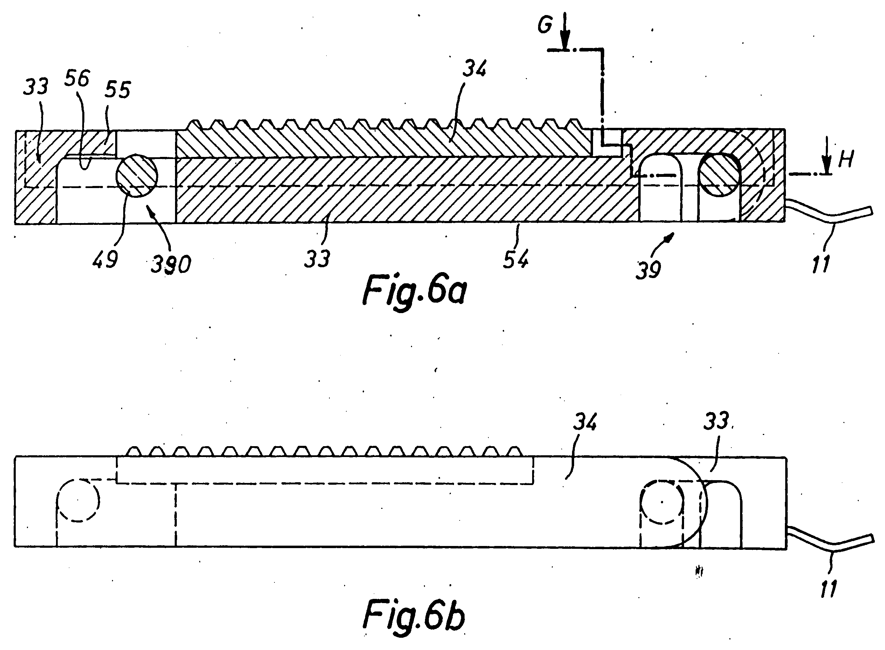

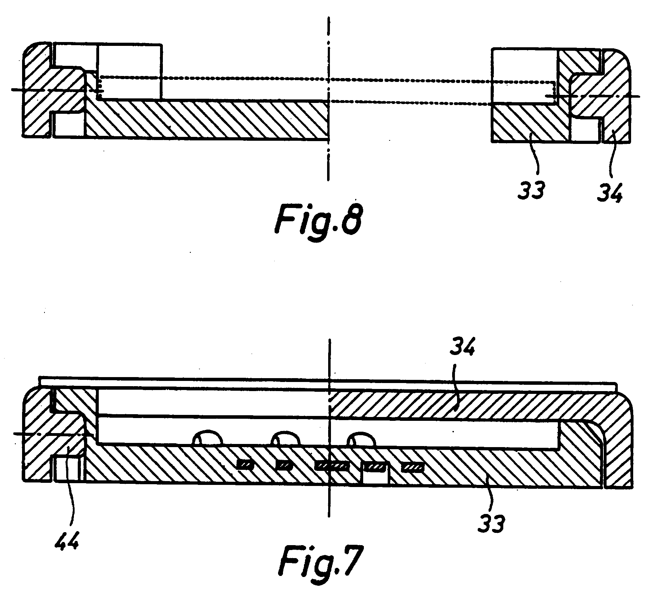

In den Figuren 4 bis 10 und 21-24 ist ein zweites und drittes Ausführungsbeispiel einer erfindungsgemäßen Kontaktiereinrichtung 32 dargestellt. Diese Beispiele sind nur hinsichtlich der Verriegelungsmittel als Ausführungsbeispiele anzusehen, da wesentlich. Merkmale der Ansprüche 1 und 2 nicht gezeigt sind. Die Kontaktiereinrichtung 32 weist ein als Kontaktträger dienendes Gehäuse 33 sowie einen Deckel 34 auf. Der Deckel 34 ist gemäß der Erfindung durch Anlenkmittel 38, 380 schwenkbar am Gehäuse 33 gelagert. Die Anlenkmittel 38, 380 sind erfindungsgemäß derart ausgebildet, daß durch eine Verschiebung des sich in seiner Schließstellung (Fig. 6a) befindenden Deckels 34 die in Fig. 6b gezeigte Verriegelungsstellung erreicht wird, so daß der Deckel 34 nicht unbeabsichtigt geöffnet werden kann.

Das Gehäuse oder der Kontaktträger 33 besitzt eine Bodenwand 36, in der die Kontaktelemente in der Form von Kontaktfedern 8 eingebaut sind. Die Kontaktfedern 8 sind - wie in Fig. 5 und 6 deutlich gezeigt - vorzugsweise gegen eine Unterseite 43 der Bodenwand 36 vorgespannt (vgl. Fig. 6) und werden beim Schließen des Deckels (vgl. Fig. 5) durch Deckel und SIM 1 für eine gute Kontaktgabe nach unten gedrückt.

Die Bodenwand 36 besitzt Seitenwände 37, die eine Ausnehmung oder Vertiefung 35 begrenzen.

Um den SIM 1 zum Öffnen des Deckels 34 leicht erfassen zu können, ist ein Ausschnitt 47 vorgesehen. Ferner bildet die Ausnehmung 35 eine Polarisationsschräge 48. Ähnlich wie beim ersten Ausführungsbeispiel kontaktieren auch hier die Kontaktenden 11 irgendwelche Kontaktzonen auf beispielsweise einer nicht dargestellten Leiterplatte. Es sind natürlich auch andere Anschlußmöglichkeiten für die Kontaktelemente 8 denkbar.

Benachbart den vier Ecken des Kontaktträgers 3 sind als Teile der Anlenkmittel 38, 380, wie auch der noch näher zu erläuternden Verriegelungsmittel, jeweils Ausnehmungen 39 bzw. 390 vorgesehen, die praktisch quer zur Längsachse 53 des Kontaktträgers 33 verlaufen. Zur Form dieser die Anlenkmittel 38,380 bildenden Ausnehmungen 39, 390 sei insbesondere auch auf die Fig. 6a hingewiesen. Man erkennt, daß im Bereich der Ausnehmung 39 zwei tiefe in die Seitenwand 33 eingdringende Ausnehmungsteile 40,42 vorgesehen sind, die durch einen (weniger tiefen) Vorsprung 41 getrennt sind. Zur Bodenseite 54 der Bodenwand 36 hin ist die Ausnehmung 39 offen, nach oben hin aber geschlossen.

Die beiden Anlenkmittel 380 weisen jeweils eine Ausnehmung 390 auf, die zur Bodenseite 54 hin offen und nach oben hin teilweise offen ist. Hier bildet die Seitenwand einen Vorsprung 55, der an seiner Unterseite eine Rastfläche 56 besitzt, was man insbesondere in Fig. 6a erkennen kann. Dadurch wird erreicht, daß nach dem Verschwenken des Deckels 34 in die in Fig. 5 gezeigte Lesestellung der Deckel 34 dank der an seiner Oberseite angebrachten Riffelung in Fig. 6a nach links verschoben werden kann, um so in die in Fig. 6b gezeigte Verriegelungsstellung verschoben zu werden. Bei dieser Verschiebung nach links bewegen sich die gegenüberliegenden Zapfen 44 des Deckels 34, die in die Ausnehmung 39 ragen, dank der Elastizität des Deckels über die Vorsprünge 41 hinweg und rasten in den Ausnehmungsteilen 40 ein. Da der SIM 1 in der Ausnehmung 35 sitzt und dort gehalten ist, tritt durch die Verschiebung des Deckels 34 aus der in Fig. 6 gezeigten Deckelschließstellung in die in Fig. 6b gezeigte Verriegelungsstellung keine Verschiebung des SIM 1 auf.

Der Deckel 34 überspannt die Vertiefung 35 in der insbesondere in den Fig. 4, 7 und 8 gezeigten Art und Weise und trägt einstückig neben den bereits erläuterten Zapfen 44 noch Zapfen 49, die als Verriegelungszapfen bezeichnet werden können.

Der Deckel 34 ist in beiden Positionen - verriegelt bzw. entriegelt - jeweils gerastet. Er kann im entriegelten Zustand auch mit der Karte bzw. dem SIM 1 durch Anheben geöffnet werden.

Die Lagerung des Deckels 34 am Kontakträger oder -gehäuse 833 kann so gestaltet sein, daß der Deckel 34 sehr leichtgängig ist oder durch Reibkraft in jeder Öffnungslage stehenbleibt.

Wie Fig. 6a zeigt, ist die Ausnehmung 390 nach oben hin geöffnet, damit beim Zuklappen des Deckels 34 die Zapfen 49 in die Ausnehmung 390 eintreten können.

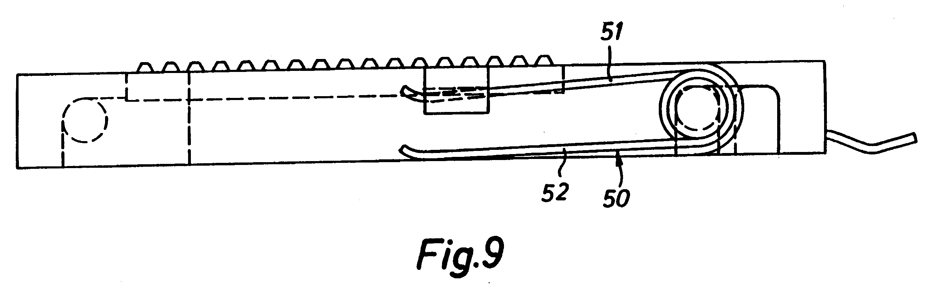

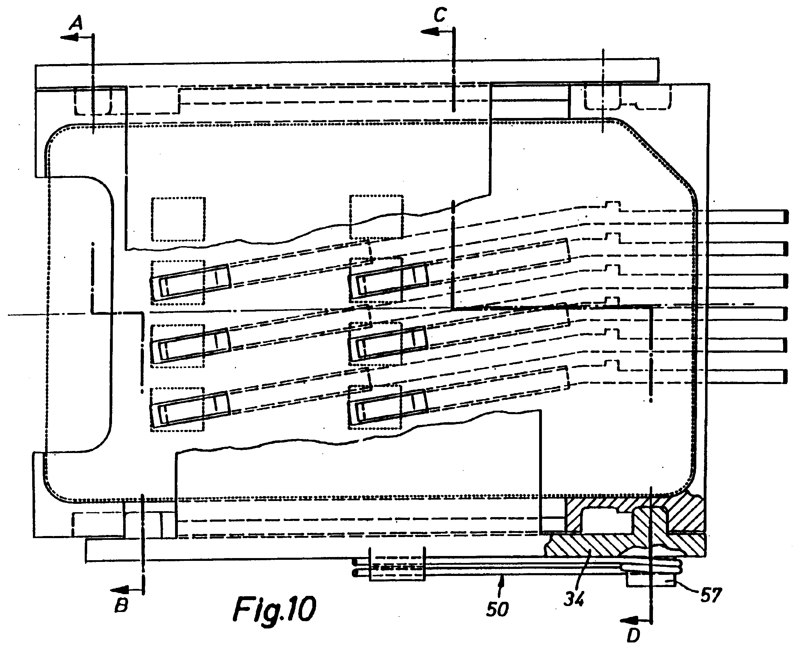

Die Fig. 9 und 10 zeigen als drittes Ausführungsbeispiel eine Abwandlung des zweiten Ausführungsbeispiels gemäß den Fig. 4 und 6b insoferne, als hier Federmittel in der Form einer zwei Arme 51, 52 aufweisenden Feder 50 vorgesehen sind. Die Feder 50 ist zum einen an einem Halteteil 57 des Deckels 34 angeordnet. Zum anderen liegt die Feder 50 mit ihrem einem Arm am Deckel und mit ihrem anderen Arm am Gehäuse 33 derart an, daß der Deckel 34 in seine Öffnungsposition vorgespannt ist. Die Anlage der Arme 52,52 ist derart vorgesehen, daß die Verschiebung des Deckels in die Raststellung ohne weiteres möglich ist.

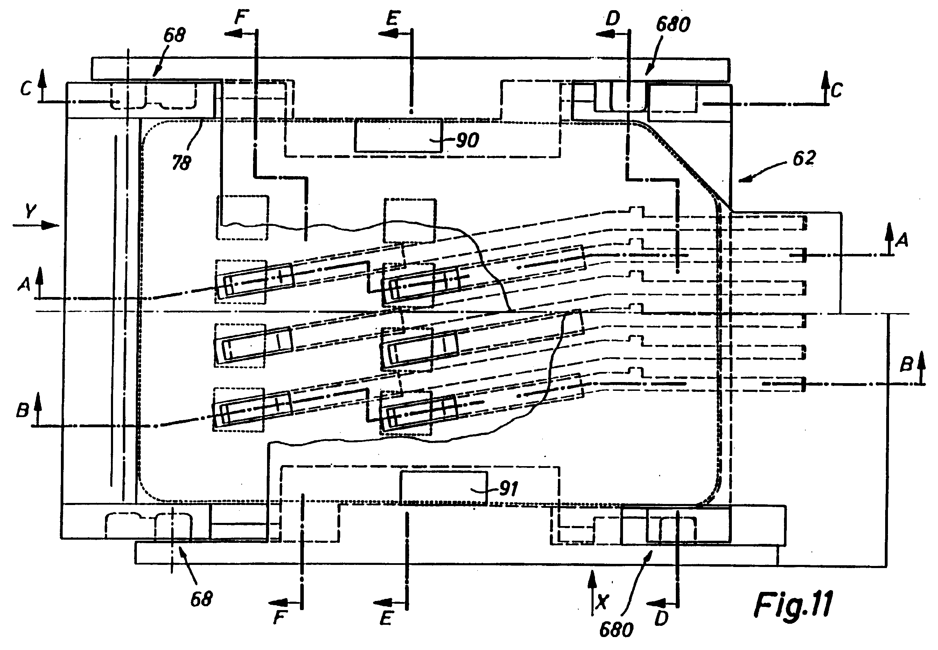

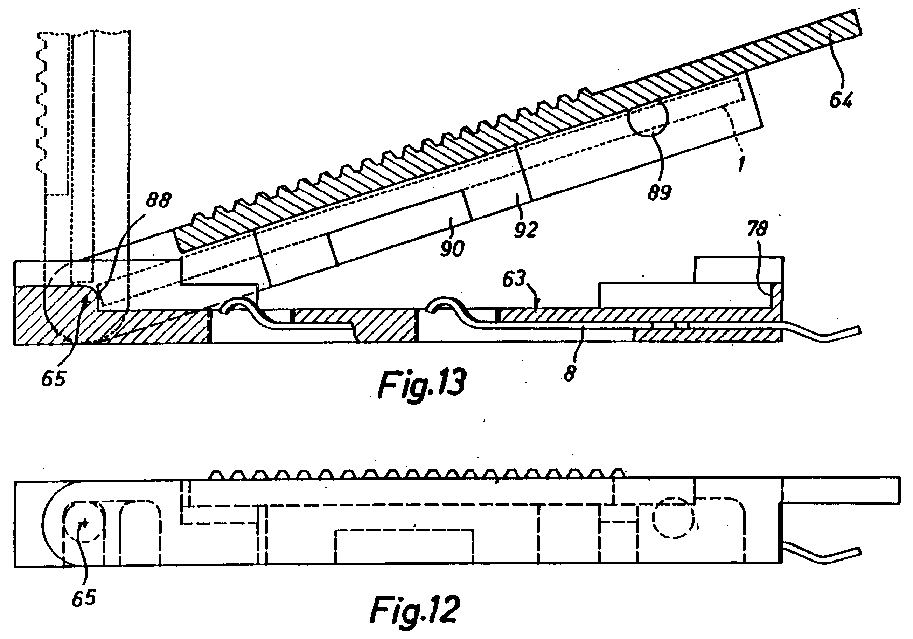

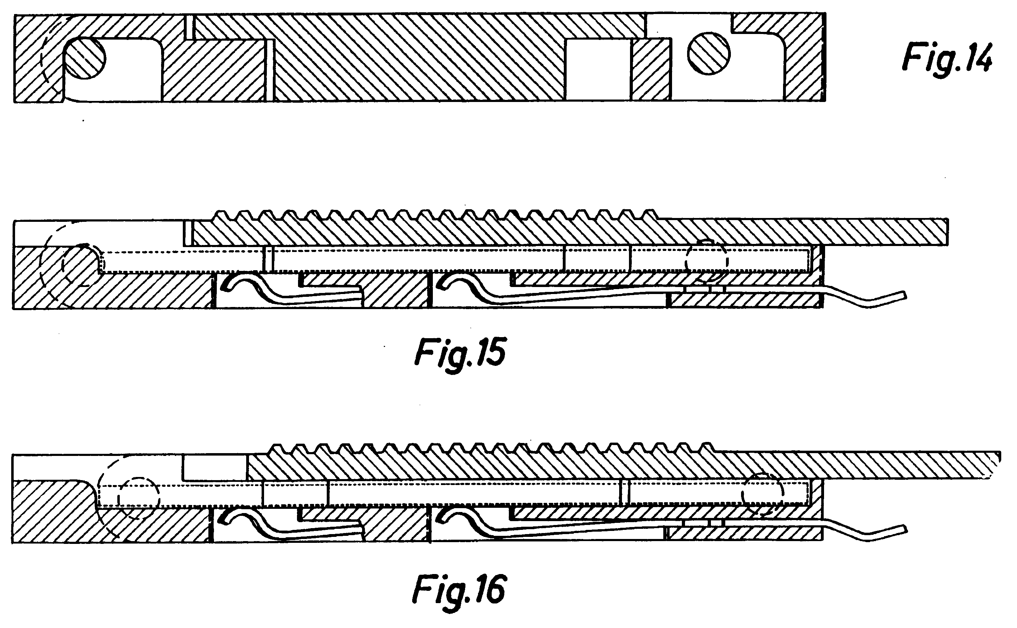

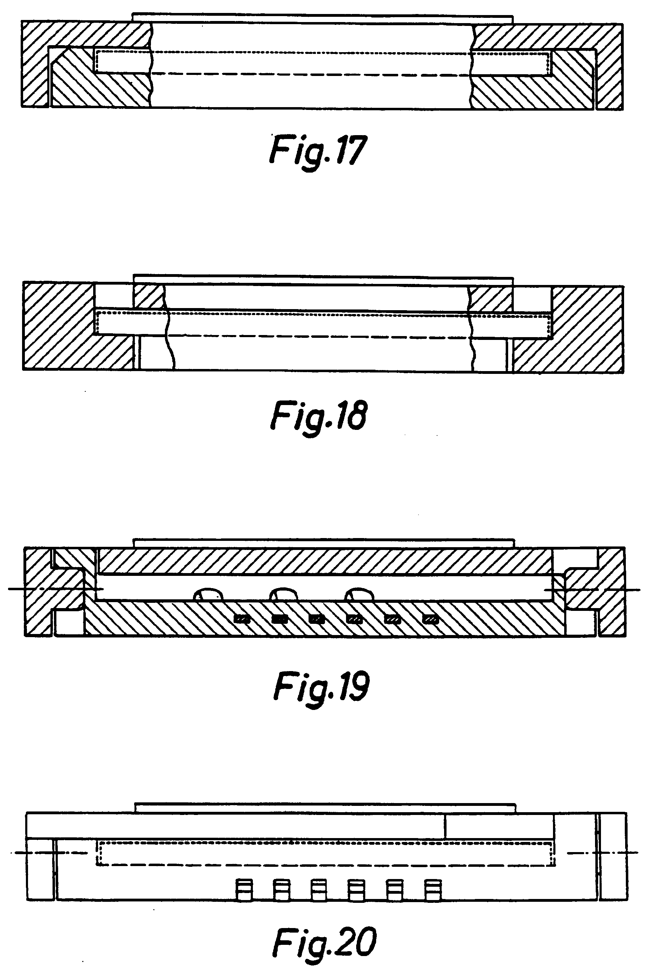

In den Fig. 11 bis 20 ist ein viertes Ausführungsbeispiel einer Kontaktiereinrichtung 62 dargestellt. Die Kontaktiereinrichtung 62 unterscheidet sich von der Kontaktiereinrichtung 32 im wesentlichen insoferne, als hier der SIM 1 - vgl. Fig. 13 - in einen Deckel 64 eingesetzt wird, der schwenkbar an einem Gehäuse oder Kontaktträger 63 gelagert ist. Kontaktelemente in der Form von Kontaktfedern 8 sind hier in der gleichen Weise wie beim vorhergegangenen Ausführungsbeispiel im Gehäuse 63 angeordnet. Die Bodenwand 66 des Kontakträgers 63 bildet hier benachbart zum Schwenkpunkt 65 des Deckels eine Anschlagschulter (Anlagefläche) 88, an der der SIM 1 beim Einsetzen in den Deckel zur Anlage kommt und während der Schwenkbewegung des Deckels 64 in die Schließstellung entlang läuft.

Die Anlenkmittel 68, 680 sind benachbart zu allen vier Ecken des Gehäuses 33 vorgesehen. Die Anlenkmittel 68 entsprechen den Anlenkmitteln 38 gemäß Figur 4, und die Anlenkmittel 680 entsprechen den Anlenkmitteln 380. Auf eine ins einzelne gehende Beschreibung dieser Anlenkmittel kann daher hier verzichtet werden. Der dem Zapfen 49 in Fig. 4 entsprechende Zapfen ist hier mit 89 (z.B. in Fig. 13) bezeichnet.

Zur Aufnahme und Führung des SIM 1 im Deckel 64 sind an diesem zwei Führungsvorsprünge 90,91 ausgebildet. Die Vorsprünge 90,91 definieren - wie in Fig. 13 gezeigt - einen Schacht, wobei gegenüberliegende Wandteile 92 die Seitenführung des SIM Ubernehmen. Die Anlagefläche oder Anschlagschulter 88 am Kontaktträger begrenzt die Einstecktiefe des SIM 1. Beim Schließen des Deckels 64 wird das SIM an der Anschlagschulter 88 entlang kreisförmig in eine Vertiefung 78 des Kontaktträgers oder Gehäuses 63 gedreht. Hierin verbleibt die Karte oder das SIM 1, wenn der Deckel 64 zum Verriegeln längsverschoben wird, so daß keine Relativbewegung zwischen Karte oder SIM 1 und den Kontaktelementen 8 entsteht. Auch dieses Ausführungsbeispiel ist ähnlich wie das dritte Ausführungsbeispiel mit einer Deckelfeder 50 möglich, d.h. einer Feder 50, welche den Deckel 64 in seine in Fig. 13 angedeutete Vertikalposition vorspannt.

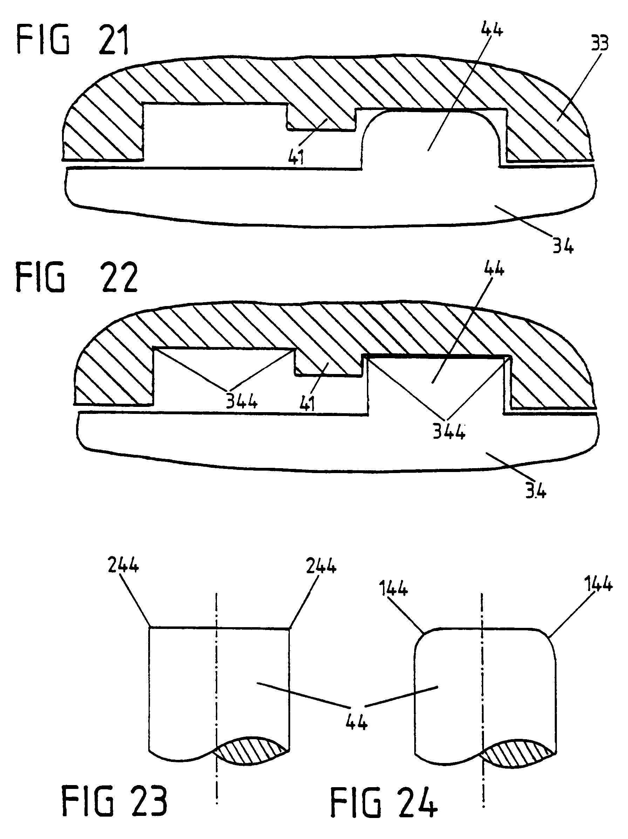

Anhand der Fig. 21 bis 24 sei noch die bereits oben anhand von Fig. 4, aber auch 10 und 11 angedeutete bevorzugte Ausbildung des Zapfens 44 erläutert, der zur Erleichterung der Verschiebung des Deckels 33 in die Verriegelungs- oder Leseposition wie folgt gestaltet ist: an zwei diametralen Stellen ist der Zapfen 44, wie in Fig 21 und 24 gezeigt, bei 144 abgerundet ist, während der Zapfen 44 scharfkantig in einer um 90° gedrehten Position diametral, wie bei 244 in Fig. 23 gezeigt, ausgebildet ist. Auf diese Weise kann der Deckel 34 in seiner Öffnungsposition nicht versehentlich über den Vorsprung oder Nocken 41 bewegt werden, zumal noch die Ausnehmungen, wie bei 344 gezeigt, ebenfalls scharfkantig sein können.

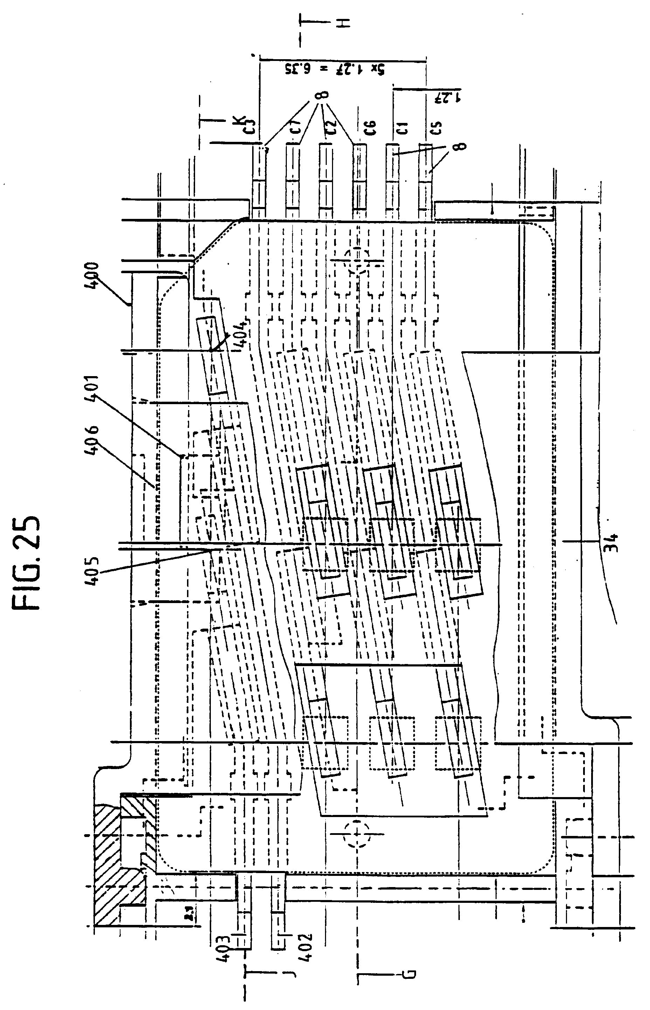

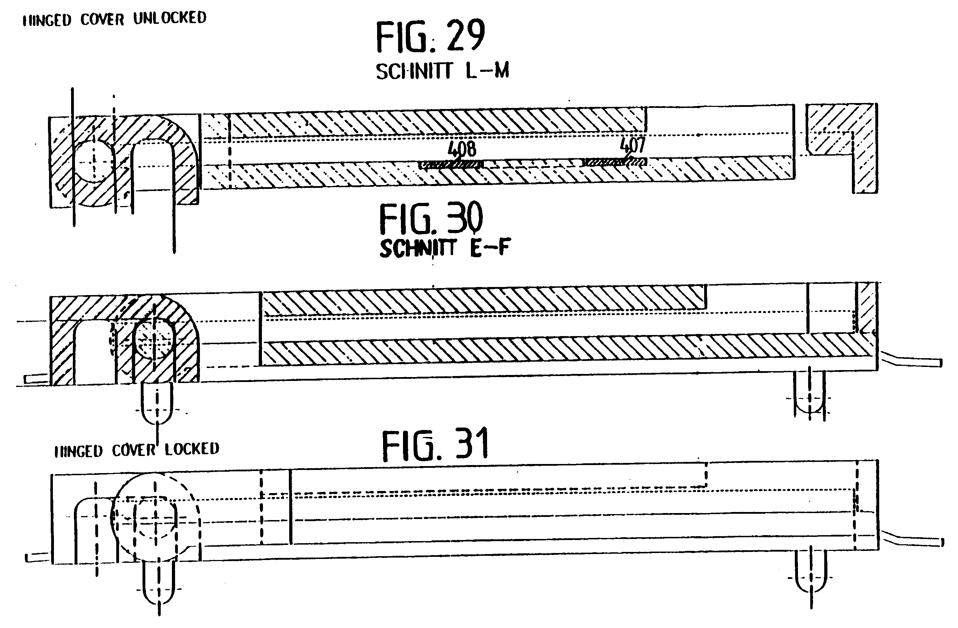

Anhand der Fig. 25 bis 31 wird ein fünftes Ausführungsbeispiel einer Kontaktiereinrichtung 400 beschrieben. Dieses fünfte Ausführungsbeispiel unterscheidet sich von den vorausgegangenen Ausführungsbeispielen insbesondere dadurch, daß ein Schalter 401 in der Kontaktiereinrichtung 400 ausgebildet ist. Die Kontaktiervorrichtung 400 weist wiederum ein Gehäuse 33 und einen Deckel 34 auf. Zusätzlich zu den Kontaktelementen 8 zur Kontaktierung einer SIM-Karte sind weitere Kontaktelemente oder Schaltkontakte 402, 403 vorgespannt im Gehäuse 33 in der gezeigten Weise angeordnet. Die hier als Schaltkontakte wirkenden Kontaktelemente 402, 403 sind von der gleichen Bauart wie die Kontaktelemente 8, die zur Kontaktierung der SIM-Karte dienen. Sie sind ebenfalls wie die Kontaktelemente 8 schräg verlaufend gegenüber der Mittellinie der Kontaktiereinrichtung 400 angeordnet. Ihre Kontaktkuppen sind mit 404 und 405 bezeichnet. Die Verbindung zwischen den Kontaktelementen 402 und 403 kann durch eine Kontaktbrücke 406 von im ganzen H-förmiger Gestalt hergestellt werden. Die zwei in dem Bereich der Kontaktkuppen 404 und 405 ragenden Arme der Kontaktbrücke 406 sind mit 407 und 408 bezeichnet.

Man erkennt in Fig. 25, daß die Schaltkontakte 402 und 403 nach links herausgeführt sind und dort ihre Lötanschlüsse bilden, so daß die Kontaktiereinrichtung 400 eine höhere mechanische Festigkeit erhält, da sie sozusagen beidseitig einmal mit den Lötanschlüssen der Schaltkontakte 402 und 403 und zum anderen mit den Lötanschlüssen der Kontaktelemente 8, also an diametralen Stellen an beispielsweise einer Schaltungsplatte angebracht werden kann.

Die bereits erwähnte Kontaktbrücke 406 ist im Deckel 34 befestigt, und zwar vorzugsweise ist die Kontaktbrücke in der Führungsbahn des Deckels 33 eingelassen.

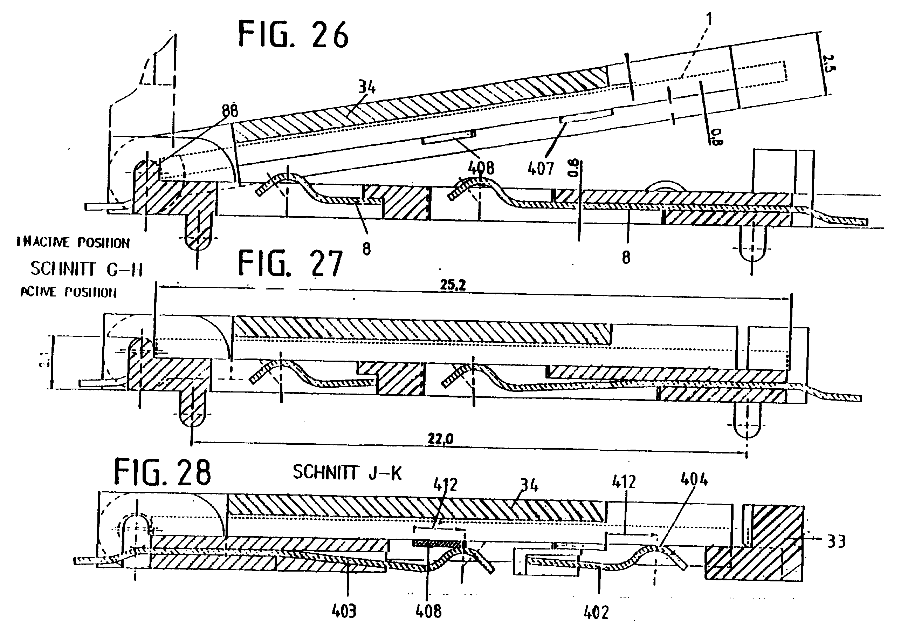

Vorzugsweise setzt beim Schließen des Deckels 34 die Kontaktbrücke 406 mit ihrem Arm 408 auf der Kontaktkuppe 405 des äußersten Kontaktelements 403 auf. Durch die in Fig. 28 mit 412 bezeichnete Verschiebebewegung des Deckels 34 nach rechts wird auch die Kuppe 404 des zweiten Schalterkontakts 402 betätigt. Durch die erfindungsgemäß Ausbildung erreicht man eine sichere Nacheilung des Schalters 401 beim Einsetzen der Karte. Der Schalter 401 soll ja vorzugsweise nicht geschlossen werden, bevor sich der Deckel in seiner Verriegelungs- oder Leseposition befindet. Diese Position wird aber durch den Schalter 401 angezeigt.

Die Schalterkontakte 402 und 403 sind wie bereits erwähnt vorgespannt im Gehäuse 33 angeordnet.

Soweit möglich wurden beim Ausführungsbeispiel gemäß Fig. 25 bis 31 die gleichen Bezugszeichen wie bei den vorausgegangenen Ausführungsbeispielen verwendet.

## Patentansprüche

1. Kontaktiereinrichtung für eine SIM Karte, mit einem Gehäuse, wobei das Gehäuse (3,33,63) als Kontaktträger ausgebildet ist, das SIM (1) durch einen Deckel (34,64) bei eingesetztem SIM gegen vorzugsweise vorgespannte Kontaktelemente gedrückt wird, der Deckel (34) schwenkbar am Gehäuse (33) angebracht ist, für die Karte seitlich nach innen ragende Führungsvorsprünge (90,91) am Deckel (64) angeordnet sind, das Gehäuse (33,63) eine Vertiefung (35,78) aufweist, in der die Karte verbleibt und dort gehalten ist, wenn der Deckel (34,64) zum Verriegeln längsverschoben ist, so daß keine Relativbewegung zwischen SIM und den Kontaktelementen (8) entsteht.

2. Kontaktiereinrichtung für eine Chipkarte oder ein SIM, mit einem Gehäuse, dadurch gekennzeichnet, daß das Gehäuse (3,33,63) als Kontaktträger ausgebildet ist, und daß das SIM (1) durch ein Gehäuseteil (16) bei eingesetztem SIM gegen vorzugsweise vorgespannte Kontaktelemente gedrückt wird, wobei am Gehäuse (3) vorzugsweise einstückig mit diesem ein vorgezogener Anschlag (4) vorgesehen ist, der elastisch derart verschwenkbar ist, daß der SIM (1) in seiner Leseposition im Gehäuse (3) gehalten wird.

3. Kontaktiereinrichtung nach Anspruch 2, dadurch gekennzeichnet, daß im Anschlag (4) eine Ausnehmung oder Vertiefung (20) ausgebildet ist, und zwar zur Aufnahme des SIM (1), und, daß die Ausnehmung (20) eine Polarisationsschräge (25) aufweist.

4. Kontaktiereinrichtung nach einem oder mehreren der Ansprüche 2 und 3, dadurch gekennzeichnet, daß die Breite des Anschlags (4) nur einem Teil, vorzugsweise einem Drittel, des SIM (1) entspricht, so daß ein leichter Zugriff zum SIM (1) möglich ist.

5. Kontaktiereinrichtung nach einem oder mehreren der Ansprüche 2-4, dadurch gekennzeichnet, daß das Gehäuse (3) neben dem vorgezogenen Anschlag ein Hauptgehäuseteil (5) mit Aufnahmeschlitz (7), sowie eine Verlängerung (6) zur teilweisen Aufnahme der Kontaktelemente (8) aufweist.

6. Kontaktiereinrichtung nach Anspruch 1, dadurch gekennzeichnet, daß zur Befestigung des Deckels am Gehäuse Anlenkmittel (38,380) vorgesehen sind, die zugleich eine Verriegelung oder Einrastung in der Lesestellung gestatten.

7. Kontaktiereinrichtung nach Anspruch 6, dadurch gekennzeichnet, daß die durch die Anlenkmittel (38,380) vorgesehene Lagerung des Deckels am Kontaktträger so gestaltet ist, daß der Deckel sehr leichtgängig ist oder durch Reibkraft in jeder Öffnungslage stehenbleibt.

8. Kontaktiereinrichtung nach einem oder mehreren der Ansprüche 1, 6 und 7, dadurch gekennzeichnet, daß im Kontaktträger eine Vertiefung oder Ausnehmung (35) ausgebildet ist, die durch eine Polarisierungsschräge (48) sicherstellt, daß der SIM (1) immer seitenrichtig eingelegt wird.

9. Kontaktiereinrichtung nach einem oder mehreren der Ansprüche 6 - 8, dadurch gekennzeichnet, daß die Anlenkmittel ineinandergreifende Elemente am Deckel und Gehäuse aufweisen.

10. Kontaktiereinrichtung nach Anspruch 9, dadurch gekennzeichnet, daß die ineinandergreifenden Elemente Zapfen bzw. Ausnehmungen sind.

11. Kontaktiereinrichtung nach einem oder mehreren der Ansprüche 1 und 6 - 10, dadurch gekennzeichnet, daß am Deckel Zapfen (44,49) ausgebildet sind, während im Gehäuse (33) Ausnehmungen (39,390) ausgebildet sind.

12. Kontaktiereinrichtung nach Anspruch 11, dadurch gekennzeichnet, daß die Ausnehmung (39) zwei Ausnehmungsteile (40,42) mit einem dazwischen angeordneten Vorsprung (41) aufweist.

13. Kontaktiereinrichtung nach Anspruch 11 oder 12, dadurch gekennzeichnet, daß die Ausnehmung (390) von einem Rastvorsprung (55) begrenzt ist, der eine Rastfläche (56) besitzt, unter die ein Zapfen (49) des Deckels (33) zum Zwecke der Verriegelung verschiebbar ist.

14. Kontaktiereinrichtung nach einem oder mehreren der Ansprüche 1 und 6 - 13, dadurch gekennzeichnet, daß ein Ausschnitt (47) im Kontaktträger (33) vorgesehen ist.

15. Kontaktiereinrichtung nach einem oder mehreren der Ansprüche 1 und 6 - 14, dadurch gekennzeichnet, daß eine Feder (50), angeordnet zwischen Gehäuse und Deckel, den Deckel in seine Öffnungsstellung vorspannt.

16. Kontaktiereinrichtung nach Anspruch 15, dadurch gekennzeichnet, daß die Feder (50) eine zweiarmige Feder ist.

17. Kontaktiereinrichtung (62), nach einem der vorhergehenden Ansprüche 1 und 6 - 15, dadurch gekennzeichnet, daß das SIM (1) in den geöffneten Deckel (64) einsetzbar ist und bei Verschwenkung des Deckels (64) zum Gehäuse oder Kontaktträger (63) hin mit den Kontakten in Eingriff gebracht wird.

18. Kontaktiereinrichtung nach einem der Ansprüche 1 und 6 - 17, dadurch gekennzeichnet, daß an der Unterseite des Deckels ein Schacht gebildet wird, welcher die Seitenführung der Karte oder des SIM (1) übernimmt.

19. Kontaktiereinrichtung nach einem der Ansprüche 1 und 6 - 18, dadurch gekennzeichnet, daß der Deckel (64) Wandteile (92) bildet, welche die seitliche Führung des SIM (1) übernehmen.

20. Kontaktiereinrichtung nach einem der Ansprüche 1 und 6 - 19, dadurch gekennzeichnet, daß eine Anschlagschulter (88) am Gehäuse (63) die Einstecktiefe der Karte begrenzt.

21. Kontaktiereinrichtung nach einem der vorhergehenden Ansprüche, dadurch gekennzeichnet, daß Gehäuse und/oder Deckel aus Kunststoff vorzugsweise durch Spritzguß hergestellt sind.

22. Kontaktiereinrichung nach einem der vorhergehenden Ansprüche, dadurch gekennzeichnet, daß ein Schalter (401) vorgesehen ist, der das Erreichung der Verriegelungs- oder Leseposition für die SIM-Karte anzeigt.

23. Kontaktiereinrichung nach Anspruch 22 dadurch gekennzeichnet, daß der Schalter (401) zwei Kontaktelemente (402, 403) aufweist, die den gleichen Aufbau wie die Kontaktelemente (8) besitzen.

24. Kontaktiereinrichung nach Anspruch 23, dadurch gekennzeichnet, daß die Schaltkontakte (402, 403) entgegengesetzt zu den Kontaktelementen (8) angeordnet, also auf der entgegengesetzten Seite aus dem Gehäuse der Kontaktiereinrichtung herausgeführt sind.

25. Kontaktiereinrichung nach einem der Ansprüche 23 oder 24, dadurch gekennzeichnet, daß die Schalt kontakte (402, 403) vorgespannt sind.

26. Kontaktiereinrichung nach einem der Ansprüche 23 - 25, dadurch gekennzeichnet, daß die Kontaktkuppen der Schaltkontakte (402, 403) in Verschieberichtung des Deckels versetzt sind.

27. Kontaktiereinrichung nach einem der Ansprüche 22 - 26, dadurch gekennzeichnet, daß im Deckel ein Kontaktelement, vorzugsweise in der Form einer Kontaktbrücke (406), angeordnet ist.

28. Kontaktiereinrichung nach Anspruch 27, dadurch gekennzeichnet, daß beim Schließen des Deckels die Kontaktbrücke zunächst die eine Kontaktkuppe des einen Schaltkontakts kontaktiert, wobei die Anordnung derart getroffen ist, daß nach Bewegung des Deckels in seine Verriegelungsstellung die Kontaktbrücke die andere Kuppe des anderen Schaltkontakts kontaktiert, wobei vorzugsweise die Kontaktbrücke jeweils mit Endkanten mit den Kontaktkuppen in der Lesestellung des Deckels in Berührung steht.

29. Kontaktiereinrichung nach Anspruch 28, dadurch gekennzeichnet, daß die Kontaktbrücke zwei Kontaktarme (408, 407) aufweist, die mit den entsprechenden Kontaktkuppen (405, 404) zusammenarbeiten.

30. Kontaktiereinrichung nach einem der Ansprüche 28 oder 29, dadurch gekennzeichnet, daß die in Bewegungsrichtung vorne liegende Kante des Kontaktarmes (408) beim Schließen des Deckels die Kontaktkuppe (405) kontaktiert, und daß nach der Verschiebung des Deckels in seine Verriegelungs- oder Leseposition die hintere Kante des Arms (408) die Kontaktkuppe (405) kontaktiert, während die vordere Kante des Kontaktarms (407) die Kontaktkuppe (404) kontaktiert.

31. Kontaktiereinrichung nach Anspruch 30, dadurch gekennzeichnet, daß die in Bewegungsrichtung des Deckels vorhandene Breite der Kontaktarme der zur Verriegelung erforderlichen Schiebebewegung (412) entspricht.

32. Kontaktiereinrichung nach einem der Ansprüche 22 - 31, dadurch gekennzeichnet, daß der Deckel (34) nur in geschlossenem Zustand verschoben werden kann, wobei diese Schiebemöglichkeit für den nacheilenden Schalter (401) vorteilhaft ist.

33. Kontaktiereinrichung nach einem der Ansprüche 31 und 32, dadurch gekennzeichnet, daß die formschlüssige Verriegelung derart ausgebildet ist, daß der nacheilende Schalter (401) damit betätigt wird.

34. Kontaktiereinrichung nach einem der Ansprüche 1 und 6 - 33, dadurch gekennzeichnet, daß das Drehlager des Klappdeckels (34) in Kraftrichtung geschlossen ist.

35. Kontaktiereinrichung nach Anspruch 11, dadurch gekennzeichnet, daß der bzw. die Zapfen für die Drehlagerung und die Verschiebebewegung zum einen diametral verrundet und zum anderen bei Drehung um 90° scharfkantig ausgebildet sind.

36. Kontaktiereinrichung nach Anspruch 12, dadurch gekennzeichnet, daß die Rundung des Zapfens (44) im geschlossenen Zustand über den Vorsprung (41) gleitet, wohingegen im geöffneten Zustand die scharfkantige Ecke (244) des Anlenkzapfens ein Verschieben des Deckels verhindert.

37. Kontaktiereinrichtung nach Anspruch 1, dadurch gekennzeichnet, daß der unabhängig vom Gehäuse ebenfalls aus Kunststoff hergestellte Deckel (34) in dem Gehäuse (33) einrastend befestigt ist.

## Claims

1. A contacting apparatus for a SIM card, having a housing wherein the housing (3, 33, 63) is designed as a contact support, the SIM (1) is pressed by means of a cover (34, 64) against preferably biased contact elements, the cover (34) is pivotably mounted at the housing (33), inwardly projecting guide projections (90, 91) are provided for the card disposed at the sides of the cover (64), and the housing (33, 63) comprises a recess (35, 78) within which the card remains and is retained when the cover (34, 64) is moved in a longitudinal direction for purposes of locking, such that no relative movement occurs between the SIM and the contact elements (8).

2. The contacting apparatus for a chip card or a SIM, having a housing and being characterized in that
the housing (3, 33, 63) is designed as a contact support, and that the inserted SIM (1) is pressed against preferably biased contact elements, by means of a housing portion (16), wherein at the housing (3) a projecting abutment means (4) preferably integral therewith is provided, said abutment means being resiliently pivotable such that the SIM (1) is held in its reading position in the housing (3).

3. The contacting apparatus as set forth in claim 2, characterized in that in said abutment means (4) a niche or recess (20) is formed adapted to receive said SIM (1), and that the recess (20) comprises inclined polarization means (25).

4. The contacting apparatus as set forth in one or more of claims 2 and 3, characterized in that the width of the abutment means (4) corresponds only to a part, preferably to one third of the width of the SIM (1) such that an easy access to the SIM (1) is possible.

5. The contacting apparatus as set forth in one or more of claims 2 to 4, characterized in that the housing (3) comprises besides the abutment means a main housing portion (5) having a receiving slot (7) as well as an extension (6) for partially receiving the contact elements (8)

6. The contacting apparatus as set forth in claim 1, characterized in that hinge means (38, 380) are provided for mounting the cover to the housing, said hinge means also allowing for a locking or fixation by detent means in the reading position.

7. The contacting apparatus as set forth in claim 6, characterized in that the support or bearing of the cover at the contact support by means of the hinge means (38, 380) is designed such that the cover is either easily movable or remains steady in each opening position due to the frictional force.

8. The contacting apparatus as set forth in claims 1, 6 and 7, characterized in that a niche or a recess (35) is formed in the contact support which guarantees by means of an inclined polarization means (48) that the SIM (1) is always inserted with the proper sideways orientation.

9. The Contacting apparatus as set forth in one or more of claims 6 to 8, characterized in that the hinge means comprise interdiditating elements at the cover and the housing.

10. The contacting apparatus as set forth in claim 9, characterized in that the interdiditating elements are pins and recesses, respectively.

11. The contacting apparatus according as set forth in one or more of claims 1 and 6 to 10, characterized in that pins (44, 49) are provided on the cover, while recesses (39, 390) are provided in the housing (33).

12. The contacting apparatus as set forth in claim 11, characterized in that said recess (39) comprises two recess portions (40, 42) with a projection (41) therebetween.

13. The contacting apparatus as set forth in claims 11 or 12, characterized in that the recess (390) is bordered by a detent projection (55) which comprises a detent surface (56) under which a pin (49) of the cover (33) is movable for the purpose of locking.

14. The contacting apparatus as set forth in one or more of claims 1 and 6 to 13, characterized in that a spring (50) arranged between the housing and the cover biases the cover into its opening position.

15. The contacting apparatus as set forth in one or more of claims 1 and 6 to 14, characterized in that a spring (50) arranged between the housing and the cover biases the cover into its opening position.

16. The contacting apparatus as set forth in claim 15, characterized in that the spring (50) is a two arm spring.

17. The contacting apparatus (62) as set forth in one of the preceding claims 1 and 6 to 15, characterized in that the SIM (1) can be inserted into the opened cover (64) and, when said cover (64) is pivoted towards the housing or contact support (63) the SIM is brought into engagement with said contacts.

18. The contacting apparatus as set forth in one of claims 1 and 6 to 17, characterized in that at the bottom side of the cover a tunnel is formed which provides for the guidance of the sides of the card or SIM (1).

19. The contacting apparatus as set forth in one of claims 1 and 6 to 18, characterized in that the cover (64) forms wall portions (92) which provide for lateral guidance of the SIM (1).

20. The contacting apparatus as set forth in one of claims 1 and 6 to 19, characterized in that an abutment shoulder (88) at the housing (63) limits the depth of insertion of the card.

21. The contacting apparatus as set forth in one or more of the preceding claims, characterized in that the housing and/or the cover are made of plastic material, preferably by injection molding.

22. The contacting apparatus as set forth in one of the preceding claims, characterized in that a switch (401) is provided which indicates that the locking or reading position for the SIM card has been reached.

23. The contacting apparatus as set forth in claim 22, characterized in that the switch (401) comprises two contact elements (402, 403), which have the same design as contact elements (8).

24. The contacting apparatus as set forth in claim 23, characterized in that the switching contacts (402, 403) are arranged oppositely with respect to the contact elements (8), i. e. they are guided out of the housing of the contacting apparatus on the opposite side.

25. The contacting apparatus as set forth in one of claims 23 or 24, characterized in that the switching contact (402, 403) are biased.

26. The contacting apparatus as set forth in one of claims 23 to 25, characterized in that the contact cusps of the switching contact (402, 403) are offset in the direction of movement of the cover.

27. The contacting apparatus as set forth in one of claims 22 to 26, characterized in that a contact element preferably in the form of a contact bridge (406) is arranged in the cover.

28. The contacting apparatus as set forth in claims 27, characterized in that when closing the cover, the contact bridge initially contacts one contact cusps of the one switching contact, wherein the arrangement is provided such that after the movement of the cover into its locking position, the contact bridge contacts the other cusps of the other switching contacts, wherein preferably the contact bridge is in contact with end edges with the contact cusps in the reading position of the cover.

29. The contacting apparatus as set forth in claim 28, characterized in that the contact bridge comprises two contact arms (408, 407) which cooperate with corresponding contact cusps (405, 404).

30. The contacting apparatus as set forth in one of claims 28 or 29, characterized in that the edge of the contact arm (408) which is located forwardly in the direction of movement contacts the contact cusps (405) when the cover is closed, and that after the linear movement of the cover into its locking or reading position, the backwardly located edge of the arm (408) contacts the contact cusp (405), while the forwardly located edge of the contact arm (407) contacts the contact cusp (404).

31. The contacting apparatus as set forth in claim 30, characterized in that the width of the contact arms in the direction of movement of the cover corresponds to the amount of movement (412), required for the locking mode.

32. The contacting apparatus as set forth in one of claims 22 to 31, characterized in that the cover (34) can be moved only in its closed condition, wherein said movement is advantageous with regard to the lagging switch (401).

33. The contacting apparatus as set forth in one of claims 31 and 32, characterized in that the locking means which provide a locking action by shape is provided such that the lagging switch (401) is activated thereby.

34. The contacting apparatus as set forth in one of claims 1 and 6 to 33, characterized in that the rotatable mounting of the pivotable cover (34) is closed in the direction of force.

35. The contacting apparatus as set forth in claim 11, characterized in that the pin(s) for rotatably mounting and the movement are designed such that they are rounded at diametrically opposite locations and that they have sharp edges, when rotated by 90°.

36. The contacting apparatus as set forth in claim 12, characterized in that the rounding of the pin (44) slides in the closed condition across the projection (41) while in the open condition the sharp edged corner (244) of the hinge pin blocks a linear movement of the cover.

37. The contacting apparatus as set forth in claim 1, characterized in that the cover (34) is made like the housing of plastic material but independently thereof and is adapted to be mounted at the housing (33) by detent means.

## Revendications

1. Agencement d'établissement de contact pour une carte SIM, avec un boîtier, le boîtier (3, 33, 63) étant constitué sous forme de support de contact et le SIM (1) étant pressé par un couvercle (34, 64) lors de SIM inséré, contre des éléments de contact, de préférence précontraints, le couvercle (34) étant disposé sur le boîtier (33) en étant susceptible d'être orienté, des parties de guidage en saillie (90, 91) faisant saillie latéralement vers l'intérieur, pour la carte, étant disposées sur le couvercle (64) et le boîtier (33, 63) présentant un renfoncement (35, 78) dans lequel la carte reste et est maintenue, lorsque le couvercle (34, 64) est translaté longitudinalement pour le verrouillage, de sorte qu'aucun mouvement relatif ne se crée entre le SIM et les éléments de contact (8).

2. Agencement d'établissement de contact pour une carte à puce ou un SIM, avec un boîtier, caractérisé en ce que le boîtier (3, 33, 63) est constitué sous forme de support de contact et que le SIM (1) est pressé par une partie de boîtier (16), lors de SIM inséré, contre des éléments de contact, de préférence précontraints, étant entendu que sur le boîtier (3) constitué comme support de contact il est prévu, de préférence d'une pièce avec celui-ci, une butée (4) étirée en avant, qui est susceptible d'être orientée élastiquement de telle sorte que le SIM (1) est maintenu dans sa position de lecture dans le boîtier (3).

3. Agencement d'établissement de contact selon la revendication 2, caractérisé en ce que dans la butée (4) est constitué un évidement ou renfoncement (20), et ce pour loger le SIM (1), et en ce que l'évidement (20) présente une inclinaison de polarisation (25).

4. Agencement d'établissement de contact selon une ou plusieurs des revendications 2 et 3, caractérisé en ce que la largeur de la butée (4) correspond seulement à une partie, de préférence un tiers, du SIM (1), de sorte qu'un accès facile au SIM (1) est possible.

5. Agencement d'établissement de contact selon une ou plusieurs des revendications 2 à 4, caractérisé en ce que le boîtier (3), à côté de la butée étirée vers l'avant, présente une partie de boîtier principal (5) avec fente de logement (7), ainsi qu'un prolongement (6) pour le logement partiel des éléments de contact (8).

6. Agencement d'établissement de contact selon la revendication 1, caractérisé en ce que pour la fixation du couvercle au boîtier, des moyens d'articulation (38, 380) sont prévus, qui, en même temps, permettent un verrouillage ou encliquetage dans la position de lecture.

7. Agencement d'établissement de contact selon la revendication 6, caractérisé en ce que le positionnement, prévu par les moyens d'articulation (38, 380), du couvercle au support de contact est configuré de telle sorte que le couvercle est très facilement accessible ou reste dans chaque position d'ouverture par force de friction.

8. Agencement d'établissement de contact selon une ou plusieurs des revendications 1, 6 et 7, caractérisé en ce que dans le support de contact est constitué un renfoncement ou évidement (35) qui, grâce à une inclinaison de polarisation (48), assure que le SIM (1) est toujours introduit du bon côté.

9. Agencement d'établissement de contact selon une ou plusieurs des revendications 6 à 8, caractérisé en ce que les moyens d'articulation présentent, sur le couvercle et sur le boîtier, des éléments venant en prise les uns dans les autres.

10. Agencement d'établissement de contact selon la revendication 9, caractérisé en ce que les éléments venant en prise les uns dans les autres sont des tourillons et des évidements.

11. Agencement d'établissement de contact selon une ou plusieurs des revendications 1 et 6 à 10, caractérisé en ce que des tourillons (44, 49) sont constitués sur le couvercle, tandis que des évidements (39, 390) sont constitués sur le boîtier.

12. Agencement d'établissement de contact selon la revendication 11, caractérisé en ce que l'évidement (39) présente deux parties d'évidement (40, 42), avec une partie en saillie (41) agencée entre celles-ci.

13. Agencement d'établissement de contact selon la revendication 11 ou 12, caractérisé en ce que l'évidement (390) est limité par une partie en saillie d'encliquetage (55) qui possède une surface d'encliquetage (56) sous laquelle un tourillon (49) du couvercle (33) est susceptible d'être translaté dans le but du verrouillage.

14. Agencement d'établissement de contact selon une ou plusieurs des revendications 1 et 6 à 13, caractérisé en ce qu'une découpe (47) est prévue dans le support de contact (33).

15. Agencement d'établissement de contact selon une ou plusieurs des revendications 1 et 6 à 14, caractérisé en ce qu'un ressort (50), agencé entre boîtier et couvercle, précontraint le couvercle dans sa position d'ouverture.

16. Agencement d'établissement de contact selon la revendication 15, caractérisé en ce que le ressort (50) est un ressort à deux bras.

17. Agencement d'établissement de contact (62) selon une des précédentes revendications 1 et 6 à 15, caractérisé en ce que le SIM (1) est susceptible d'être inséré dans le couvercle (64) ouvert, et, lors de pivotement du couvercle (64) vers le boîtier ou support de contact (63), est amené en engagement avec les contacts.

18. Agencement d'établissement de contact selon une des revendications 1 et 6 à 17, caractérisé en ce qu'est formé sur le côté inférieur du couvercle un entonnoir qui prend en charge le guidage latéral de la carte ou du SIM (1).

19. Agencement d'établissement de contact selon une des revendications 1 et 6 à 18, caractérisé en ce que le couvercle (64) forme des parties de paroi (92) qui prennent en charge le guidage latéral du SIM (1).

20. Agencement d'établissement de contact selon une des revendications 1 et 6 à 19, caractérisé en ce qu'un épaulement de butée (88), sur le boîtier (63), limite la profondeur d'enfichage de la carte.

21. Agencement d'établissement de contact selon une des précédentes revendications, caractérisé en ce que le boîtier et/ou le couvercle sont réalisés en matière synthétique, de préférence par moulage par injection.

22. Agencement d'établissement de contact selon une des précédentes revendications, caractérisé en ce qu'un interrupteur (401) est prévu, qui indique l'atteinte de la position de verrouillage ou de lecture pour la carte SIM.

23. Agencement d'établissement de contact selon la revendication 22, caractérisé en ce que l'interrupteur (401) présente deux éléments de contact (402, 403) qui possèdent la même constitution que les éléments de contact (8).

24. Agencement d'établissement de contact selon la revendication 23, caractérisé en ce que les contacts de commutation (402, 403) sont agencés à l'opposé des éléments de contact (8), donc sont guidés vers l'extérieur, hors du boîtier de l'agencement d'établissement de contact, sur le côté situé à l'opposé.

25. Agencement d'établissement de contact selon une des revendications 23 ou 24, caractérisé en ce que les contacts de commutation (402, 403) sont précontraints.

26. Agencement d'établissement de contact selon une des revendications 23 à 25, caractérisé en ce que les dômes de contact des contacts de commutation (402, 403) sont décalés dans la direction de translation du couvercle.

27. Agencement d'établissement de contact selon une des revendications 22 à 26, caractérisé en ce qu'un élément de contact, de préférence sous forme d'un pont de contact (406), est agencé dans le couvercle.

28. Agencement d'établissement de contact selon la revendication 27, caractérisé en ce que, lors de la fermeture du couvercle, le pont de contact établit tout d'abord un contact avec l'un des dômes de contact de l'un des contacts de commutation l'agencement étant concerné de telle sorte qu'après déplacement du couvercle à sa position de verrouillage, le pont de contact établit un contact avec l'autre dôme de l'autre contact de commutation, le pont de contact se trouvant de préférence, chaque fois, en contact avec les dômes de contact par des arêtes d'extrémité dans la position de lecture du couvercle.

29. Agencement d'établissement de contact selon la revendication 28, caractérisé en ce que le pont de contact présente deux bras de contact (408, 407) qui coopèrent avec les dômes de contact (405, 404) correspondants.

30. Agencement d'établissement de contact selon une des revendications 28 et 29, caractérisé en ce que l'arête du bras de contact (408) se trouvant en avant dans la direction du mouvement établit un contact avec le dôme de contact (405) lors de la fermeture du couvercle et en ce que, après la translation du couvercle à sa position de verrouillage ou de lecture, l'arête arrière du bras (408) établit un contact avec le dôme de contact (405), tandis que l'arête avant du bras de contact (407) établit un contact avec le dôme de contact (404).

31. Agencement d'établissement de contact selon la revendication 30, caractérisé en ce que la largeur des bras de contact, présente dans la direction de déplacement du couvercle, correspond au mouvement de coulissement (412) requis pour le verrouillage.

32. Agencement d'établissement de contact selon une des revendications 22 à 31, caractérisé en ce que le couvercle (34) ne peut être translaté qu'à l'état fermé, cette possibilité de coulissement étant avantageuse pour l'interrupteur (401) retardant.

33. Agencement d'établissement de contact selon une des revendications 31 et 32, caractérisé en ce que le verrouillage par complémentarité de forme est constitué de telle sorte que l'interrupteur (401) retardant est actionné par celui-ci.

34. Agencement d'établissement de contact selon une des revendications 1 et 6 à 33, caractérisé en ce que le logement pivotant du couvercle rabattable (34) est fermé en direction de la force.

35. Agencement d'établissement de contact selon la revendication 11, caractérisé en ce que le ou les tourillons pour l'installation avec pivotement et le mouvement de translation sont, d'une part, arrondis diamétralement et, d'autre part, présentent des arêtes vives lors de rotation sur 90°.

36. Agencement d'établissement de contact selon la revendication 12, caractérisé en ce que l'arrondi du tourillon (44), à l'état fermé, glisse au-dessus de la partie en saillie (41), tandis qu'à l'état ouvert le coin (244) à arête vive du tourillon d'articulation empêche un coulissement du couvercle.

37. Agencement d'établissement de contact selon la revendication 1, caractérisé en ce que le couvercle (34), réalisé indépendamment du boîtier également en matière synthétique, est fixé par encliquetage dans le boîtier (33).
